# EUROPEAN PATENT SPECIFICATION

(11) **EP 3 336 367 B1**
(45) Date of publication and mention of the grant of the patent: **09.10.2019**
(21) Application number: 17204986.8
(22) Date of filing: 01.12.2017
(51) Int. Cl.: F16B 19/10

(54) **DOWEL FOR ESTABLISHING A SLIDING ATTACHMENT BETWEEN TWO PLATES**
DÜBEL ZUR HERSTELLUNG EINER GLEITBEFESTIGUNG ZWISCHEN ZWEI PLATTEN
CHEVILLE POUR ÉTABLIR UNE FIXATION COULISSANTE ENTRE DEUX PLAQUES

(30) Priority: 16.12.2016 ES 201631477 U
(43) Date of publication of application: 20.06.2018
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- EP-A1- 1 757 821
- EP-A1- 1 881 577
- FR-A1- 2 761 127
- US-A- 5 163 795
- US-A1- 2010 295 272

## Description

### Field of the Invention

The invention is comprised in the field of the devices used for attaching two plates in a sliding manner.

More specifically, the invention relates to a dowel for establishing a sliding attachment between two plates provided with slot holes arranged one against the other with their respective slot holes perpendicular to and facing one another, forming a passage for said dowel.

The invention is applied in a particularly advantageous but not exclusive manner for connecting two cable trays of the type normally used for guiding electrical cables, optical fiber cables or cables of another type going through a space, by means of a connecting profile which is reversibly attached to each of the two cable trays.

### State of the Art

In order to lay cables in a space using cable trays, the cable trays are placed one after the other in the longitudinal direction and assembled to one another at their ends by means of a connecting profile that is attached to the cable trays in a sliding manner. This connecting profile is provided with slot holes extending in the longitudinal direction of the cable trays and facing corresponding holes provided in the cable trays, such that the two holes facing one another forms a passage for an attachment device. The attachment between the connecting profile and the cable tray by means of this attachment device must allow relative sliding of the cable trays in the longitudinal direction in anticipation of possible expansion of the cable trays. In a known solution used by the applicant, the attachment device is an assembly formed by a dowel with a stem and a head, and with a bolt transversely going through said stem. To form the attachment, the stem of the dowel is introduced into the passage formed by the two holes, and then the bolt is placed such that it is going through the stem in a section of said stem projecting from the passage. This technique satisfactorily provides the desired functionality, i.e., a sliding attachment of the cable trays connected to one another by the connecting profile. However, the operation for a user to put the attachment in place presents certain difficulty, since the user must use the hand to access the end of the stem opposite the head of the dowel, which is located on the face of the cable tray opposite the face through which said stem was introduced. These requirements are a considerable drawback in large sized installations, where the user must put in place a significant number of attachment devices. In turn, the cable tray disassembly operation is likewise difficult for the same reasons.

The same problem may generally arise for establishing a sliding attachment between two plates provided with slot holes, when said plates are arranged one against the other with their respective slot holes perpendicular to and facing one another, forming a passage for the dowel.

Attachment devices which allow establishing an attachment between two plates acting on only one side are known (see e.g. US 2010/0295272 A1). These attachment devices are formed by two parts: a first part comprising a stem that is introduced into the passage, and a second part that is inserted into the stem of the first part, for example by means of screwing or nailing, in order to widen it and thereby cause said first part to be firmly caught in the passage due to the friction force between the stem and the walls of the passage. However, these attachment devices do not provide the desired functionality, since they do not allow relative sliding between the plates.

In turn, a large enough free space above the hole for placing the tool opposite same is required to screw or nail these devices together, and said free space is not always available. Furthermore, these attachment devices are not easy to disassemble.

### Description of the Invention

The purpose of the invention is to provide a dowel that allows establishing the sliding attachment between the plates in a much simpler but equally secure manner.

This is achieved by means of a dowel of the type indicated above, wherein it is formed by a first part and a second part which is detachably pressure-coupled to said first part, wherein:
- said first part comprises a first head and two first pins extending in cantilever fashion from said first head, said two first pins facing and being separated from one another by a space and wherein at least one of said first pins is able to experience an elastic bending that moves them away from one another; first retaining projections arranged in a first axial plane being formed at the free ends of said first pins; and said first head being provided with a through hole that leads into said space separating said first pins;
- said second part comprises a second head and two second pins extending in cantilever fashion from said second head, said two second pins facing and being separated from one another and wherein at least one of said second pins is able to experience an elastic bending that moves them closer to one another; said second pins being shaped such that they pass through the through hole of the first part and are introduced under pressure into said space between the two first pins, thereby causing an elastic bending of at least one of said first pins that moves them away from one another to a final coupling position in which the head of the second part rests against the head of the first part; and there being formed at the free ends of said second pins second retaining projections which in said final coupling position are arranged in a second axial plane perpendicular to said first axial plane and project with respect to said first pins laterally in said second axial plane;
- said first part (1a) and said second part are shaped such that in said final coupling position they fit with one another preventing the rotation of said second part with respect to said first part.

As will be seen below in the detailed description of an embodiment, the dowel according to the invention can be readily installed by the user applying pressure with their fingers only from the side of the head of the dowel, and where the dowel can be placed in any of the two possible orientations. To that end, the user places the first part facing the passage formed by the holes of the plates, without having introduced the second part all the way into the first part, and push the first part in order to introduce the first pins into the passage until the first head rests against the plate and the first retaining projections are located outside of the passage on the other side. In this phase, the first pins are not separated by much, such that the first retaining projections do not interfere with the walls of the passage. The second part is then introduced under pressure into the first part until the final coupling position, which causes the separation of the first pins and therefore the separation of the first retaining projections. Furthermore, in this final coupling position the second part is snapped into the first part, such that the assembly formed by the first and second pins forms an integral stem, and the second retaining projections of the second pins are oriented perpendicular to the first retaining projections. The two parts can be sized, with respect to the thickness of the plates and the dimensions of the holes, such that in this final coupling position the stem is not caught in the passage and can slide along the slot hole freely or with certain friction, and such that the first and second retaining projections project from the passage in the axial direction of the dowel. When the dowel is introduced with a first possible orientation, the first retaining projections act like a harpoon providing a return-preventing action, preventing the removal of the dowel, and when the dowel is placed with a second possible orientation turned 90º, the second retaining projections perform this function. It can be seen that thanks to this configuration, the attachment between the two plates is provided by the return-preventing function of the first or second retaining projections, depending on the orientation of the dowel, without the stem formed by the first and second pins getting caught in the passage.

Preferred embodiments the features of which are described in the dependent claims have been provided based on the invention defined in the main claim.

Preferably, the second pins are shaped such that they have a shape correspondence with the space between the first pins or with the through hole, said shape correspondence preventing the rotation of the second part with respect to the first part. Thanks to this configuration, the relative rotation of the second part with respect to the first part from the time the second pins are initially introduced into said space between the first pins is prevented.

Preferably, each of said first pins has a flat outer face between said first head and said first retaining projection, and in said final coupling position said flat outer faces of the first pins are parallel to one another and perpendicular to a flat inner face of said first head from which said first pins extend; and each of said second pins has a flat outer face between said second head and said second retaining projection, and in said final coupling position said flat outer faces of the second pins are parallel to one another and perpendicular to said flat inner face of the first head. This configuration facilitates a guided sliding of the stem along the slot hole of the plate in any of the two possible orientations of the dowel.

Preferably, the outer face of said first head, opposite said flat inner face, forms a flat seating surface, and the inner face of said second head has a flat surface which rests against said flat seating surface in said coupling position; and said flat seating surface is interrupted by at least one recess extending from the perimeter of said first head and forming an interstice between said first and second heads in said final coupling position that can be accessed from the outside to receive a flathead screwdriver. This configuration provides a firm seating of the second head on the first head and allows readily disassembling the dowel with the help of a flathead screwdriver or other tool with a similar shape.

Preferably, said outer face of the first head comprises a plurality of said recesses distributed along the perimeter of said first head, thereby forming a plurality of said interstices distributed along the perimeter of said first head. Thanks to this configuration, the dowel can be readily disassembled, as described above, regardless of its orientation.

Preferably, each of said second pins of the second part comprises an intermediate retaining projection that is separated from said second retaining projection, such that when said second pins of the second part are introduced through said through hole of the first head, said first head is trapped between said intermediate retaining projection and said second retaining projection, said first and second parts thereby being coupled to one another in an intermediate coupling position. This configuration allows keeping the two parts together until the time of placing the dowel in the passage between the plates, whereby the user does not have to handle two parts.

Preferably, said first retaining projections are formed by a harpoon-shaped tip of said first pin. Likewise, preferably, said second retaining projections are formed by a harpoon-shaped tip of said second pin. This shape facilitates the introduction of the pins through the passage and provides proper return-preventing retention.

Preferably, one pin of said second pins is longer than the other pin and is provided at its end with a lug extending into a prolongation of the space of separation between said first pins and located past the end of said other first pin in the direction of moving away from the first head. This lug facilitates the introduction of the first pins into the passage, because it prevents their ends from getting caught on the edges of the passage. Furthermore, in said final coupling position, said lug is preferably arranged between the ends of said two second pins, thereby preventing these two second pins from moving closer to one another, and thereby assuring the return-preventing function of the second retaining projections.

Preferably, each of said first and second parts is a single molded part made of a polymeric material. Preferably, the polymeric material is an electrically insulating material. It can be, for example, a thermoplastic material, such as PVC, polycarbonate or polypropylene, as well as a thermosetting resin. The device thus formed can advantageously be used for attaching cable trays also made of an electrically insulating, polymeric material by means of connecting profiles also made of an electrically insulating, polymeric material, whereby obtaining a safe electrical protection making it unnecessary to ground the cable tray installation.

In a particularly advantageous application of the dowel according to the invention, according to any of the variants described above, said dowel is used to attach two cable trays placed one after the other and connected to one another through a connecting profile. In this case, the dowel is applied for attaching the connecting profile to the cable tray in a sliding manner, and the two plates provided with slot holes are, on one hand, the bottom of the cable tray, and on the other a wing of the connecting profile. In this application, the ease of assembling the dowel is a particularly important advantage. Preferably, the connecting profile fits in a sliding manner in one of the side walls of the cable tray, so that the dowel only acts as a safety element to prevent the connecting profile from coming out and the cable trays from subsequently being disassembled. In this case, it is not necessary in the final coupling position for the first or second retaining projections to be placed tightly against the plate, but rather the dowel can have some play for axial movement. This allows having just one dowel model that can be applied to different plate thicknesses.

The invention also comprises other detail features illustrated in the following detailed description of an embodiment of the invention and in the attached drawings.

### Brief Description of the Drawings

The advantages and features of the invention will be understood from the following description in which a preferred embodiment of the invention is described in reference to the drawings without limiting the scope of the main claim.
Figure 1 is a top perspective view of the assembly of a dowel in the intermediate coupling position, in a preferred application in which the dowel is used for attaching a connecting profile to a cable tray in a sliding manner.
Figures 2 and 3 are enlarged top perspective and bottom perspective views, respectively, of the assembly of Figure 1.
Figure 4 is a perspective view of a dowel in the final coupling position.
Figures 5 and 6 show a perspective view and a side view, respectively, of a dowel in the intermediate coupling position.
Figures 7 and 8 show a perspective view and a side view, respectively, of the first part of the dowel.
Figures 9 and 10 show a perspective view and an elevational view, respectively, of the second part of the dowel.
Figures 11, 12 and 13 are detail views showing the dowel in the assembly corresponding to Figure 1, but in the final coupling position, in a bottom perspective view, a top perspective and a lateral partial section view, respectively.

### Detailed Description of an Embodiment of the Invention

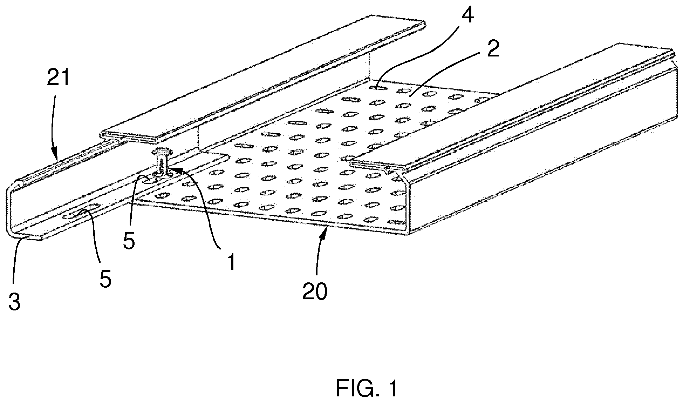

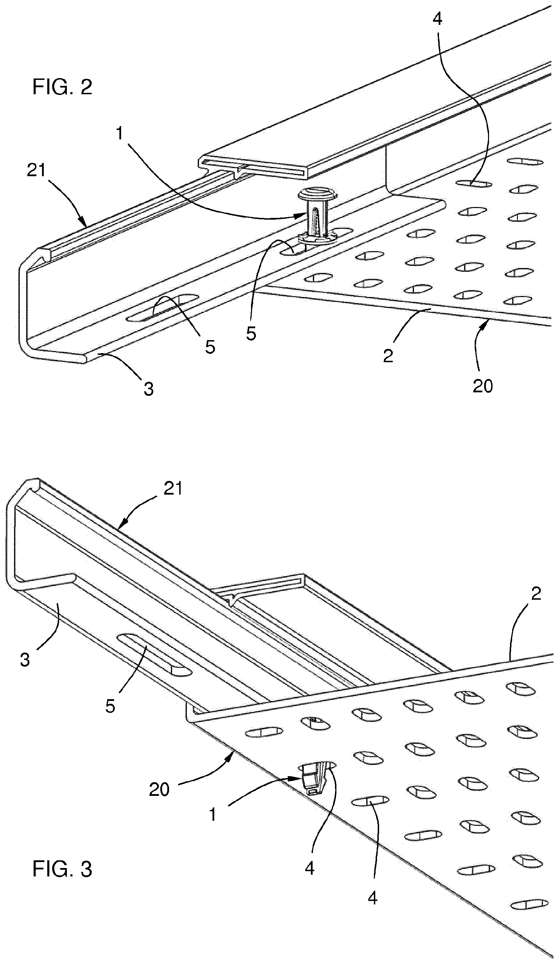

The embodiment shown by way of example in the drawings corresponds to a particularly advantageous application of the dowel 1 according to the invention, in which said dowel 1 is used for attaching two cable trays 20 placed one after the other and connected to one another through a connecting profile 21. Figures 1 to 3 show the connecting profile 21 fitted at one end in a sliding manner in one of the side walls of one of the cable trays 20. The other cable tray, which in turn is also attached to the other end of the connecting profile 21 by means of another identical dowel 1, is not depicted. The dowel 1 is applied for attaching the connecting profile 21 to the cable tray 20 in a sliding manner, and the two plates 2, 3 provided with slot holes 4, 5 are, respectively, the bottom of the cable tray 20 and a wing of the connecting profile 21. The plates 2, 3 are arranged one against the other, with their respective slot holes 4, 5 arranged perpendicular to one another and forming a passage through which the dowel 1 is inserted. Preferably, the two slot holes 4, 5 forming the passage have the same width, whereby said passage has a square shape.

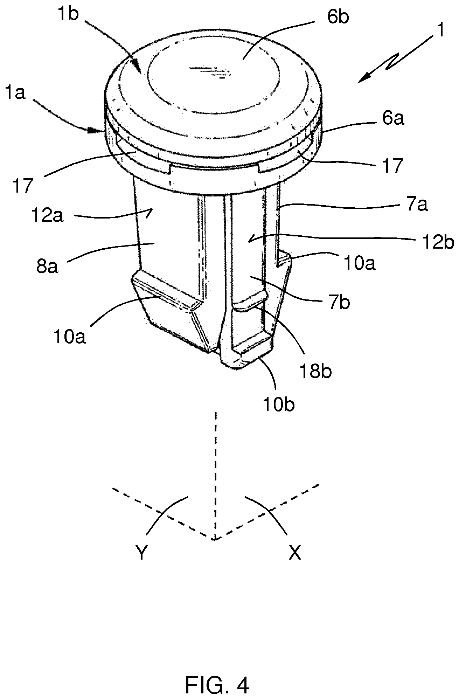

As can be seen in Figures 4 to 10, the dowel 1 is formed by two parts 1a, 1b. Each of these two parts 1a, 1b is a molded part made of a polymeric material. An electrically insulating material with a surface resistivity greater than 100 MΩ, such as PVC (polyvinyl chloride), for example, is preferably chosen as a polymeric material. The cable trays 20 and the connecting profile 21 are also preferably made of an electrically insulating material with a surface resistivity greater than 100 MΩ, such as PVC, for example.

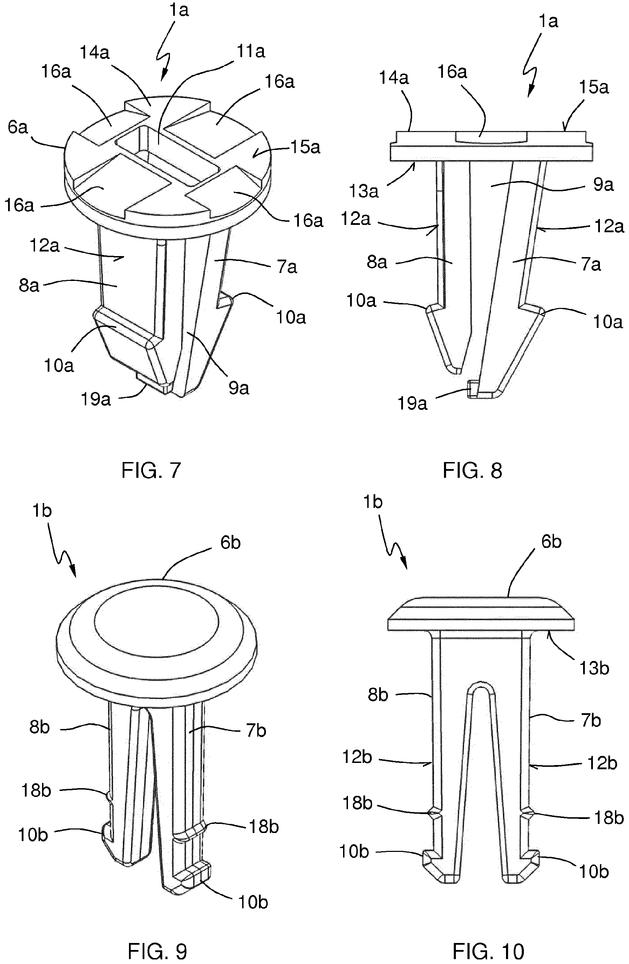

The first part 1a (see Figures 7 and 8) has a first head 6a in which there is a through hole 11a that leads into a space 9a. A flat seating surface 15a which is interrupted by four recesses 16a extending from the perimeter of said first head 6a and regularly distributed along said perimeter is formed on the outer face 14a of this first head 6a. First pins 7a, 8a, which are facing and separated from one another by the space 9a, and which are able to experience an elastic bending that moves them away from one another, extend from the inner face 13a of the first head 6a in cantilever fashion. First harpoon-shaped retaining projections 10a arranged in a first axial plane X are formed at the free ends of the first pins 7a, 8a. Both first pins 7a, 8a have a flat outer face 12a between the first head 6a and the first retaining projection 10a. Furthermore, one pin 7a of the first pins is longer than the other pin 8a and has at its end a lug 19a extending into a prolongation of the space 9a separating the first pins 7a, 8a and located past the end of the other first pin 8a in the direction of moving away from the first head 6a.

The second part 1b (see Figures 9 and 10) has a second head 6b, the inner face 13b of which has a flat surface, and two second pins 7b, 8b extending in cantilever fashion from said inner face 13b of the second head 6b. Second harpoon-shaped retaining projections 10b arranged in a second axial plane Y, which is perpendicular to the first axial plane X in the final coupling position shown in Figure 4, are formed at the free ends of the second pins 7b, 8b. Both second pins 7b, 8b have a flat outer face 12b between the second head 6b and the second retaining projection 10b, and an intermediate retaining projection 18b that is separated from the second retaining projection 10b. The second pins 7b, 8b are facing and separated from one another and are able to experience an elastic bending that moves them closer to one another.

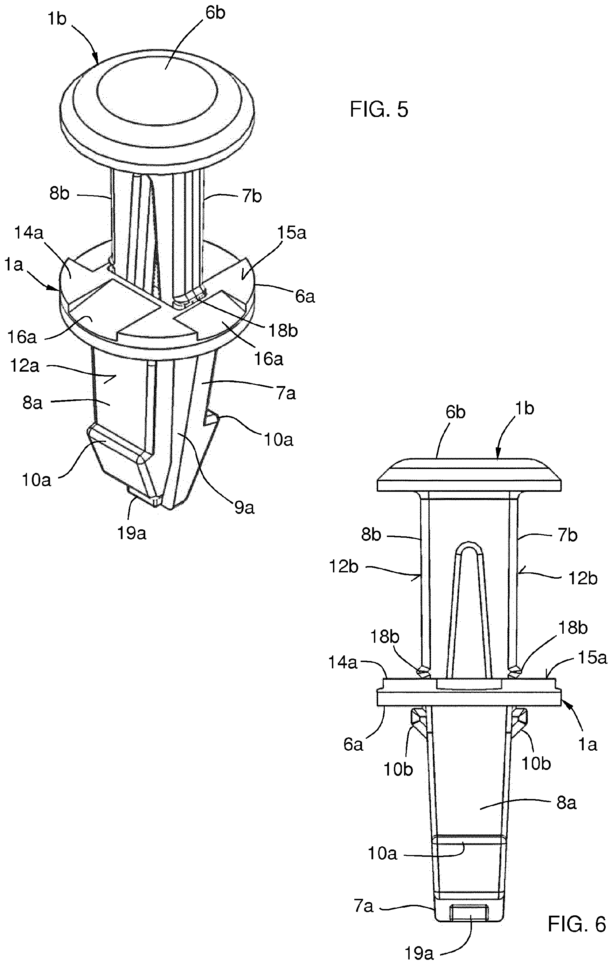

The second part 1b is detachably pressure-coupled to the first part 1a, thereby forming the dowel 1. Figure 4 shows a final coupling position of the two parts 1a, 1b, whereas Figures 5 and 6 show an intermediate coupling position of said parts. Preferably, the dowel 1 is supplied in the intermediate coupling position to facilitate the assembly thereof and to make it more user-intuitive. To perform the intermediate coupling shown in Figures 5 and 6, the second part 1b is pushed so that the ends of the second pins 7b, 8b pass under pressure through the through hole 11a of the first part 1a as a result of an elastic bending of the second pins 7b, 8b that moves them closer to one another, until the first head 6a of the first part 1a is trapped between the intermediate retaining projection 18b and the second retaining projection 10b of the second part 1b.

To obtain the final coupling position shown in Figure 4 preferably starting from the intermediate coupling position shown in Figures 5 and 6, the user simply applies pressure with the thumb on the second head 6b, i.e., enough pressure to cause an elastic bending of the second pins 7b, 8b that moves them closer to one another, such that the intermediate retaining projections 18b pass through the through hole 11a. The user then continues to apply pressure with the thumb on the second head 6b to introduce the second pins 7b, 8b into the space 9a between the first pins 7a, 8a under pressure. As can be seen in Figure 8, the first pins 7a, 8a converge towards one another, such that the space 9a between them tapers off towards the ends of same and does not allow the second pins 7a, 8b to freely pass therethrough. Next, the introduction of the second pins 7b, 8b in the space 9a under pressure causes a forced widening of this space 9a by means of an elastic bending of at least one of the first pins 7a, 8a that moves them away from one another. In the preferred embodiment shown in Figure 8, one of the first pins 8a is orthogonal to the first head 6a, whereas the other pin 7a is oblique, such that the introduction of the second pins 7b, 8b in the space 9a in the orthogonal direction with respect to said first head 8a causes the elastic bending of just the first oblique pin 7a.

In the final coupling position, the first part 1a and the second part 1b fit with one another, preventing a relative rotation between them. To that end, the second pins 7b, 8b are preferably shaped such that have a shape correspondence with the space 9a or with the through hole 11a. More preferably, in the example depicted in the drawings the through hole 11a and the space 9a both have one and the same rectangular shape, and the envelopment of the second pins 7b, 8b has a corresponding rectangular shape.

The final coupling position is reached when the flat surface of the inner face 13b of the second head 6b rests against the flat seating surface 15a of the outer face 14a of the first head 6a. In this final coupling position, the second retaining projections 10b are arranged in a second axial plane Y perpendicular to the first axial plane X and project with respect to the first pins 7a, 8a laterally in said second axial plane Y. The flat outer faces 12a of the first pins 7a, 8a are parallel to one another and perpendicular to the flat inner face 13a of the first head, and the flat outer faces 12b of the second pins 7b, 8b are also parallel to one another and perpendicular to said flat inner face 13a of the first head 6a. These four flat outer faces 12a, 12b together form a stem having a square section which fits with the square shape of the passage formed by the perpendicular slot holes 4, 5. The lug 19a is arranged between the ends of the second pins 7b, 8b, thereby preventing these second pins 7b, 8b from being able to come closer. The four recesses 16a of the first head 6a form interstices 17 between the first head 6a and the second head 6b that can be used to decouple the two parts 1a, 1b by means of introducing a tool, such as a flathead screwdriver.

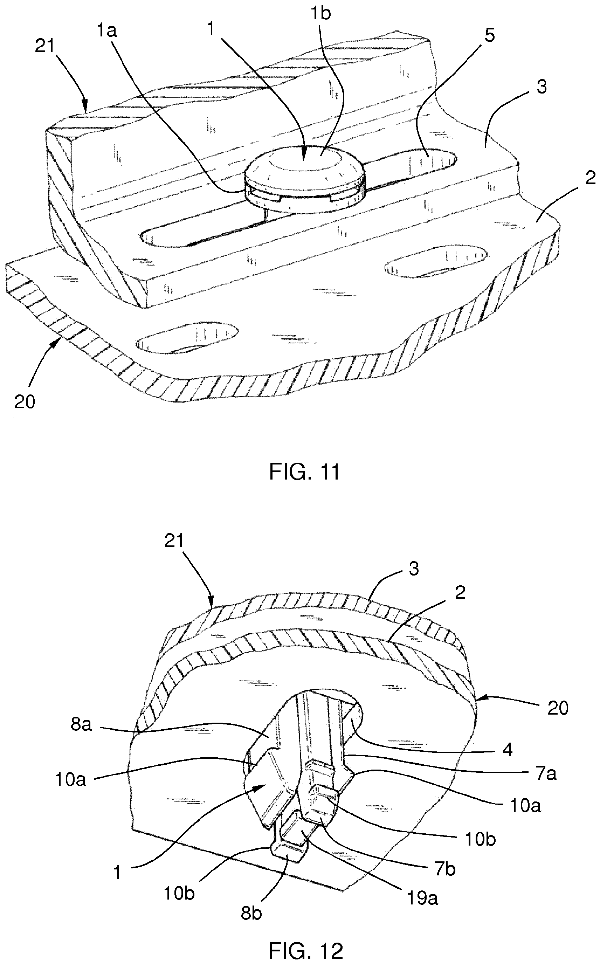

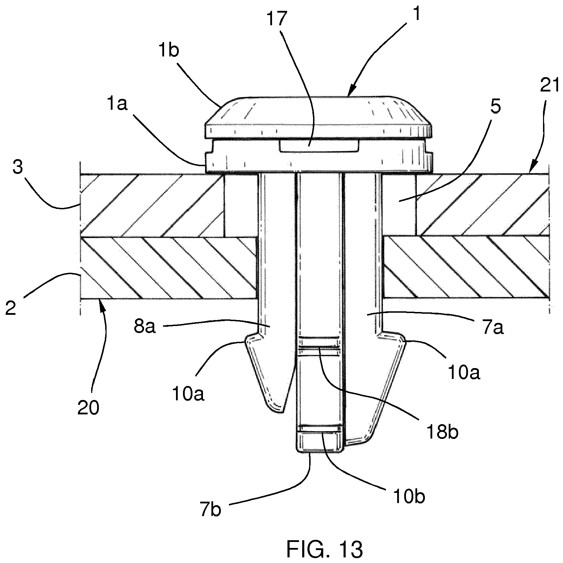

Figures 11 to 13 depict a first possible assembly for assembling the dowel 1 in the plates 2, 3. In this case, the dowel 1 is oriented such that the first axial plane X in which the first retaining projections 10a of the first pins 7a, 8a are located is orthogonal to the long walls of the slot hole 4, such that these first retaining projections 10a are the ones that are harpooned in the lower plate 2 and thereby exert a return-preventing retention of the dowel 1 in the passage formed by the two slot holes 4, 5.

In a second possible assembly not depicted in the drawings, the dowel 1 is introduced turned 90º with respect to the first possible assembly. In this case, the dowel 1 is oriented such that the second axial plane Y in which the second retaining projections 10b of the second pins 7a, 8a are located is orthogonal to the long walls of the slot hole, such that the second retaining projections 10b are the ones that are harpooned in the lower plate 2 and thereby exert a return-preventing retention of the dowel 1 in the passage formed by the two slot holes 4, 5.

So regardless of how the dowel 1 is inserted into the passage formed by the two slot holes 4, 5 of the plates 2, 3, in the final coupling position the dowel 1 is always retained in the passage by either the first retaining projections 10a of the first pins 7a, 8a or by the second retaining projections 10b of the second pins 7b, 8b. Furthermore, the first pins 7a, 8a and the second pins 7b, 8b can optionally be sized such that in the final coupling position the section of the stem formed by said pins fits with the width of the slot hole 4 in order to obtain a friction between the stem and the walls of the slot hole 4 to prevent the dowel 1 from freely oscillating in the axial direction. Nevertheless, the dowel 1 is retained in the passage by the retaining projections 10a or 10b and not by the friction between the stem and the walls of the slot hole 4.

## Claims

1. A dowel (1) for establishing a sliding attachment between two plates (2, 3) provided with slot holes (4, 5) arranged one against the other with their respective slot holes (4, 5) perpendicular to and facing one another forming a passage for said dowel (1), wherein it is formed by a first part (1a) and a second part (1b) which is detachably pressure-coupled to said first part (1a), **characterized in that**:
- said first part (1a) comprises a first head (6a) and two first pins (7a, 8a) extending in cantilever fashion from said first head (6a), said two first pins (7a, 8a) facing and being separated from one another by a space (9a), and wherein at least one of said first pins (7a, 8a) is able to experience an elastic bending that moves them away from one another; first retaining projections (10a) arranged in a first axial plane (X) being formed at the free ends of said first pins (7a, 8a); and said first head (6a) being provided with a through hole (11a) that leads into said space (9a) separating said first pins (7a, 8a);
- said second part (1b) comprises a second head (6b) and two second pins (7b, 8b) extending in cantilever fashion from said second head (6b), said two second pins (7b, 8b) facing and being separated from one another, and wherein at least one of said second pins (7b, 8b) is able to experience an elastic bending that moves them closer to one another; said second pins (7b, 8b) being shaped such that they pass through the through hole (11a) of the first part (1a) and are introduced under pressure into said space (9a) between the two first pins (7a, 8a), thereby causing an elastic bending of at least one of said first pins (7a, 8a) that moves them away from one another to a final coupling position in which the head (6b) of the second part (1b) rests against the head (6a) of the first part (1a); and there being formed at the free ends of said second pins (7b, 8b) second retaining projections (10b) which in said final coupling position are arranged in a second axial plane (Y) perpendicular to said first axial plane (X) and project with respect to said first pins (7a, 8a) laterally in said second axial plane (Y);
- said first part (1a) and said second part (1b) are shaped such that in said final coupling position they fit with one another preventing the rotation of said second part (1b) with respect to said first part (1a).

2. A dowel (1) according to claim 1, **characterized in that** said second pins (7b, 8b) are shaped such that they have a shape correspondence with said space (9a) between the first pins (7a, 8a) or with said through hole (11a), said shape correspondence preventing the rotation of said second part (1b) with respect to said first part (1a).

3. A dowel (1) according to claim 2, **characterized in that** each of said first pins (7a, 8a) has a flat outer face (12a) between said first head (6a) and said first retaining projection (10a), and in said final coupling position said flat outer faces (12a) of the first pins (7a, 8a) are parallel to one another and perpendicular to a flat inner face (13a) of said first head (6a) from which said first pins (7a, 8a) extend, and **in that** each of said second pins (7b, 8b) has a flat outer face (12b) between said second head (6a) and said second retaining projection (10b), and in said final coupling position said flat outer faces (12b) of the second pins (7b, 8b) are parallel to one another and perpendicular to said flat inner face (13a) of the first head (6a).

4. A dowel (1) according to any one of claims 1 to 3, **characterized in that** the outer face (14a) of said first head (6a), opposite said flat inner face (13a), forms a flat seating surface (15a), and the inner face (13b) of said second head (6b) has a flat surface which rests against said flat seating surface (15a) in said coupling position, and **in that** said flat seating surface (15a) is interrupted by at least one recess (16a) extending from the perimeter of said first head (6a) and forming an interstice (17) between said first and second heads (6a, 6b) in said final coupling position that can be accessed from the outside to receive a flathead screwdriver.

5. A dowel (1) according to claim 4, **characterized in that** said outer face (14a) of the first head (6a) comprises a plurality of said recesses (16a) distributed along the perimeter of said first head (6a), thereby forming a plurality of said interstices (17) distributed along the perimeter of said first head (6a).

6. A dowel (1) according to any one of claims 1 to 5, **characterized in that** each of said second pins (7b, 8b) of the second part (1b) comprises an intermediate retaining projection (18b) that is separated from said second retaining projection (10b), such that when said second pins (7b, 8b) of the second part (1b) are introduced through said through hole (11a) of the first head (6a), said first head (6a) is trapped between said intermediate retaining projection (18b) and said second retaining projection (10b), said first and second parts (1a, 1b) thereby being coupled to one another in an intermediate coupling position.

7. A dowel (1) according to any one of claims 1 to 6, **characterized in that** said first retaining projections (10a) are formed by a harpoon-shaped tip of said first pin (7a, 8a).

8. A dowel (1) according to any one of claims 1 to 7, **characterized in that** said second retaining projections (10b) are formed by a harpoon-shaped tip of said second pin (7b, 8b).

9. A dowel (1) according to any one of claims 1 to 8, **characterized in that** one pin (7a) of said first pins (7a, 8a) is longer than the other pin (8a) and is provided at its end with a lug (19a) extending into a prolongation of the space (9a) of separation between said first pins (7a, 8a) and located past the end of said other first pin (8a) in the direction of moving away from said first head (6a).

10. A dowel (1) according to claim 9, **characterized in that** said lug (19a) is arranged between the ends of said two second pins (7b, 8b) in said final coupling position.

11. A dowel (1) according to any one of claims 1 to 10, **characterized in that** each of said first and second parts (1a, 1b) is a single molded part made of a polymeric material.

## Patentansprüche

1. Dübel (1) zum Herstellen einer verschiebbaren Befestigung zwischen zwei mit Langlöchern (4, 5) versehenen Platten (2, 3), welche aneinander anliegend angeordnet sind, wobei deren jeweilige Langlöcher (4, 5) senkrecht zueinander und einander zugewandt sind und einen Durchgang für den Dübel (1) bilden, wobei
er aus einem ersten Bauteil (1a) und einem zweiten Bauteil (1b) gebildet ist, welches lösbar mit dem ersten Bauteil (1a) druckgekoppelt ist, **dadurch gekennzeichnet, dass**:
- das erste Bauteil (1a) einen ersten Kopf (6a) und zwei erste Stifte (7a, 8a) aufweist, welche sich kragarmartig von dem ersten Kopf (6a) erstrecken, wobei die beiden ersten Stifte (7a, 8a) einander zugewandt sind und durch einen Zwischenraum (9a) voneinander getrennt sind, und wobei mindestens einer der ersten Stifte (7a, 8a) eine elastische Verbiegung erfahren kann, welche sie von einander weg bewegt; erste in einer ersten Axialebene (X) angeordnete Haltevorsprünge (10a), welche an den freien Enden der ersten Stifte (7a, 8a) ausgebildet sind; und der erste Kopf (6a) mit einer Durchgangsöffnung (11a) versehen ist, welche in den Zwischenraum (9a) mündet, der die ersten Stifte (7a, 8a) voneinander trennt;
- das zweite Bauteil (1b) einen zweiten Kopf (6b) und zwei zweite Stifte (7b, 8b) aufweist, welche sich kragarmartig von dem zweiten Kopf (6b) erstrecken, wobei die zwei zweiten Stifte (7b, 8b) einander zugewandt und voneinander getrennt sind, und wobei mindestens einer der zweiten Stifte (7b, 8b) eine elastische Verbiegung erfahren kann, welche sie näher zueinander hin bewegt; die zweiten Stifte (7b, 8b) derart geformt sind, dass sie durch die Durchgangsöffnung (11a) des ersten Bauteils (1a) hindurchpassen und unter Druckeinwirkung in den Zwischenraum (9a) zwischen den beiden ersten Stiften (7a, 8a) eingeführt werden, wodurch eine elastische Verbiegung mindestens eines der ersten Stifte (7a, 8a) hervorgerufen wird, welche sie voneinander weg in eine finale Kopplungsstellung bewegt, in welcher der Kopf (6b) des zweiten Bauteils (1b) sich an dem Kopf (6a) des ersten Bauteils (1a) abstützt; und an den freien Enden der zweiten Stifte (7b, 8b) zweite Haltevorsprünge (10b) gebildet sind, welche in der finalen Kopplungsstellung in einer zweiten Axialebene (Y) angeordnet sind, welche senkrecht zu der ersten Axialebene (X) ist, und welche bezüglich der ersten Stifte (7a, 8a) lateral in die zweite Axialebene (Y) hineinreichen;
- das erste Bauteil (1a) und das zweite Bauteil (1b) derart geformt sind, dass sie in der finalen Kopplungsstellung ineinandergreifen und dadurch eine Rotation des zweiten Bauteils (1b) bezüglich des ersten Bauteils (1a) verhindern.

2. Dübel (1) nach Anspruch 1, **dadurch gekennzeichnet, dass** die zweiten Stifte (7a, 8b) derart geformt sind, dass sie eine Formentsprechung mit dem Zwischenraum (9a) zwischen den ersten Stiften (7a, 8a) oder mit der Durchgangsöffnung (11a) aufweisen, wobei die Formentsprechung die Rotation des zweiten Teils (1b) bezüglich des ersten Teils (1a) verhindert.

3. Dübel (1) nach Anspruch 2, **dadurch gekennzeichnet, dass** jeder der ersten Stifte (7a, 8a) eine plane Außenfläche (12a) zwischen dem ersten Kopf (6a) und dem ersten Haltevorsprung (10a) aufweist und die planen Außenflächen (12a) der ersten Stifte (7a, 8a) in der finalen Kopplungsstellung parallel zueinander und senkrecht zu einer planen Innenfläche (13a) des ersten Kopfes (6a) sind, von welcher aus sich die ersten Stifte (7a, 8a) erstrecken, und dass jeder der zweiten Stifte (7b, 8b) eine plane Außenfläche (12b) zwischen dem zweiten Kopf (6a) und dem zweiten Haltevorsprung (10b) aufweist und die planen Außenflächen (12b) der zweiten Stifte (7b, 8b) in der finalen Kopplungsstellung parallel zueinander und senkrecht zu der planen Innenfläche (13a) des ersten Kopfes (6a) sind.

4. Dübel (1) nach einem der Ansprüche 1 bis 3, **dadurch gekennzeichnet, dass** die Außenfläche (14a) des ersten Kopfes (6a), die der planen Innenfläche (13a) gegenüberliegt, eine plane Auflagefläche (15a) bildet, und die Innenfläche (13b) des zweiten Kopfes (6b) eine plane Fläche aufweist, welche in der Kopplungsstellung an der planen Auflagefläche (15a) anliegt, und dadurch, dass die plane Auflagefläche (15a) von mindestens einer Ausnehmung (16a) durchbrochen wird, welche sich von der Umfangslinie des ersten Kopfes (6a) erstreckt und in der finalen Kopplungsstellung einen Trennbereich (17) zwischen dem ersten und dem zweiten Kopf (6a, 6b) bildet, auf welchen von außen zur Aufnahme eines Schlitzschraubenziehers zugegriffen werden kann.

5. Dübel (1) nach Anspruch 4, **dadurch gekennzeichnet, dass** die Außenfläche (14a) des ersten Kopfes (6a) eine Vielzahl von Ausnehmungen (16a) aufweist, welche sich entlang der Umfangslinie des ersten Kopfes (6a) erstrecken, wodurch eine Vielzahl von entlang der Umlauflinie des ersten Kopfes (6a) verteilten Trennbereichen (17) gebildet wird.

6. Dübel (1) nach einem der Ansprüche 1 bis 5, **dadurch gekennzeichnet, dass** jeder der zweiten Stifte (7b, 8b) des zweiten Bauteils (1b) einen dazwischenliegenden Haltevorsprung (18b) aufweist, welcher von dem zweiten Haltevorsprung (10b) derart getrennt ist, dass, wenn die zweiten Stifte (7b, 8b) des zweiten Bauteils (1b) durch die Durchgangsöffnung (11a) des ersten Kopfes (6a) eingeführt werden, der erste Kopf (6a) zwischen dem dazwischenliegenden Haltevorsprung (18b) und dem zweiten Haltevorsprung (10b) gefangen ist, wodurch die ersten und zweiten Bauteile (1a, 1b) in einer Zwischenkupplungsstellung miteinander gekoppelt werden.

7. Dübel (1) nach einem der Ansprüche 1 bis 6, **dadurch gekennzeichnet, dass** die ersten Haltevorsprünge (10a) durch eine harpunenförmige Spitze des ersten Stiftes (7a, 8a) gebildet sind.

8. Dübel (1) nach einem der Ansprüche 1 bis 7, **dadurch gekennzeichnet, dass** die zweiten Haltevorsprünge (10b) durch eine harpunenförmige Spitze des zweiten Stiftes (7b, 8b) gebildet sind.

9. Dübel (1) nach einem der Ansprüche 1 bis 8, **dadurch gekennzeichnet, dass** ein Stift (7a) der ersten Stifte (7a, 8a) länger ist als der andere Stift (8a) und an seinem Ende mit einer Lasche (19a) versehen ist, welche sich in eine Verlängerung des die ersten Stifte (7a, 8a) voneinander trennenden Zwischenraums (9a) hineinerstreckt und welche über das Ende des anderen ersten Stiftes (8a) hinausreichend und in einer von dem ersten Kopf (6a) weg führenden Richtung angeordnet ist.

10. Dübel (1) nach Anspruch 9, **dadurch gekennzeichnet, dass** die Lasche (19a) in der finalen Kopplungsstellung zwischen den Enden der beiden zweiten Stifte (7b, 8b) angeordnet ist.

11. Dübel (1) nach einem der Ansprüche 1 bis 10, **dadurch gekennzeichnet, dass** jedes der ersten und zweiten Bauteile (1a, 1b) ein einzelnes Formteil aus einem Polymermaterial ist.

## Revendications

1. Cheville (1) pour établir une fixation coulissante entre deux plaques (2, 3) pourvues de trous oblongs (4, 5) disposés l'un contre l'autre avec leurs trous oblongs respectifs (4, 5) perpendiculaires et se faisant face formant un passage pour ladite cheville (1), laquelle est formée par une première partie (1a) et par une deuxième partie (1b) qui est couplée de manière amovible par pression à ladite première partie (1a), **caractérisée en ce que** :
- ladite première partie (1a) comprend une première tête (6a) et deux premières broches (7a, 8a) s'étendant en porte-à-faux à partir de ladite première tête (6a), lesdites deux premières broches (7a, 8a) faisant face et étant séparées l'une de l'autre par un espace (9a), et au moins une desdites premières broches (7a, 8a) pouvant subir une flexion élastique qui les éloigne l'une de l'autre ; des premières saillies de retenue (10a) disposées dans un premier plan axial (X) étant formées aux extrémités libres desdites premières broches (7a, 8a) ; et ladite première tête (6a) étant munie d'un trou traversant (11a) qui mène dans ledit espace (9a) séparant lesdites premières broches (7a, 8a) ;
- ladite deuxième partie (1b) comprend une deuxième tête (6b) et deux deuxièmes broches (7b, 8b) s'étendant en porte-à-faux à partir de ladite deuxième tête (6b), lesdites deux deuxièmes broches (7b, 8b) se faisant face et étant séparées l'une de l'autre, et dans laquelle au moins une desdites deuxièmes broches (7b, 8b) est capable de subir une flexion élastique qui les rapproche l'une de l'autre ; lesdites secondes broches (7b, 8b) étant formées de telle sorte qu'elles passent par le trou traversant (11a) de la première partie (1a) et sont introduites sous pression dans ledit espace (9a) entre les deux premières broches (7a, 8a), provoquant ainsi une flexion élastique d'au moins une desdites premières broches (7a, 8a) qui les éloigne l'une de l'autre jusque dans une position finale de couplage dans laquelle la tête (6b) de la seconde partie (1b) est posée sur la tête (6a) de la première partie (1a) ; et des deuxièmes saillies de retenue (10b) sont formées aux extrémités libres desdites deuxièmes broches (7b, 8b) qui, dans ladite position finale de couplage, sont disposées dans un deuxième plan axial (Y) perpendiculaire audit premier plan axial (X) et font saillie par rapport auxdites premières broches (7a, 8a) latéralement dans ledit deuxième plan axial (Y) ;
- ladite première partie (1a) et ladite deuxième partie (1b) sont formées de telle sorte que, dans ladite position finale de couplage, elles s'emboîtent l'une dans l'autre en empêchant la rotation de ladite deuxième partie (1b) par rapport à ladite première partie (1a).

2. Cheville (1) selon la revendication 1, **caractérisée en ce que** lesdites secondes broches (7b, 8b) sont formées de telle sorte qu'elles ont une forme correspondant audit espace (9a) entre les premières broches (7a, 8a) ou au dit trou traversant (11a), cette correspondance de forme empêchant la rotation de ladite seconde partie (1b) par rapport à ladite première partie (1a).

3. Cheville (1) selon la revendication 2, **caractérisée en ce que** chacune desdites premières broches (7a, 8a) a une face extérieure plane (12a) entre ladite première tête (6a) et ladite première saillie de retenue (10a), et dans ladite position finale d'accouplement, lesdites faces extérieures planes (12a) des premières broches (7a, 8a) sont parallèles entre elles et perpendiculaires à une face intérieure plane (13a) de ladite première tête (6a) depuis laquelle lesdites premières broches (7a, 8a) s'étendent, et **en ce que** chacune desdites secondes broches (7b, 8b) a une face extérieure plane (12b) entre ladite seconde tête (6a) et ladite seconde saillie de retenue (10b), et dans ladite position finale de couplage lesdites faces extérieures planes (12b) des secondes broches (7b, 8b) sont parallèles entre elles et perpendiculaires à ladite face intérieure plane (13a) de la première tête (6a).

4. Cheville (1) selon l'une des revendications 1 à 3, **caractérisée en ce que** la face extérieure (14a) de ladite première tête (6a), opposée à ladite face intérieure plane (13a), forme une surface d'assise plane (15a), et la face intérieure (13b) de ladite seconde tête (6b) a une surface plane qui repose contre ladite surface d'assise plane (15a) dans ladite position de couplage, et **en ce que** ladite surface d'assise plane (15a) est interrompue par au moins un évidement (16a) s'étendant depuis le périmètre de ladite première tête (6a) et formant un interstice (17) entre lesdites première et seconde têtes (6a, 6b) dans ladite position finale de couplage qui peut être accessible de l'extérieur pour recevoir une tête de tournevis plate.

5. Cheville (1) selon la revendication 4, **caractérisée en ce que** ladite face extérieure (14a) de la première tête (6a) comprend une pluralité desdits évidements (16a) répartis le long du périmètre de ladite première tête (6a), formant ainsi une pluralité desdits interstices (17) répartis sur le périmètre de ladite première tête (6a).

6. Cheville (1) selon l'une des revendications 1 à 5, **caractérisée en ce que** chacune desdites secondes broches (7b, 8b) de la seconde partie (1b) comprend une saillie de retenue intermédiaire (18b) qui est séparée de ladite seconde saillie de retenue (10b), de sorte que lorsque lesdites secondes broches (7b, 8b) de la deuxième partie (1b) sont introduites à travers ledit trou traversant (11a) de la première tête (6a), ladite première tête (6a) est coincée entre ladite saillie de retenue intermédiaire (18b) et ladite deuxième saillie de retenue (10b), lesdites première et deuxième parties (1a, 1b) étant ainsi couplées entre elles dans une position de couplage intermédiaire

7. Cheville (1) selon l'une des revendications 1 à 6, **caractérisée en ce que** lesdites premières saillies de retenue (10a) sont formées par une pointe en forme de harpon de ladite première broche (7a, 8a).

8. Cheville (1) selon l'une des revendications 1 à 7, **caractérisée en ce que** lesdites secondes saillies de retenue (10b) sont formées par une pointe en forme de harpon de ladite seconde broche (7b, 8b).

9. Cheville (1) selon l'une des revendications 1 à 8, **caractérisée en ce qu'**une broche (7a) desdites premières broches (7a, 8a) est plus longue que l'autre broche (8a) et est munie à son extrémité d'une patte (19a) s'étendant dans un prolongement de l'espace (9a) de séparation entre lesdites premières broches (7a, 8a) et située plus loin que l'extrémité de ladite autre première broche (8a) dans la direction d'éloignement de ladite première tête (6a).

10. Cheville (1) selon la revendication 9, **caractérisée en ce que** ladite patte (19a) est disposée entre les extrémités desdites deux deuxièmes broches (7b, 8b) dans ladite position finale de couplage.

11. Cheville (1) selon l'une des revendications 1 à 10, **caractérisée en ce que** chacune desdites première et seconde parties (1a, 1b) est une pièce moulée unique en un matériau polymère.
